# EUROPÄISCHE PATENTSCHRIFT

(11) **EP 3 468 838 B1**
(45) Veröffentlichungstag und Bekanntmachung des Hinweises auf die Patenterteilung: **19.07.2023**
(21) Anmeldenummer: 17730034.0
(22) Anmeldetag: 22.05.2017
(51) Int. Cl.: B60Q 1/08

(54) **FAHRZEUGSCHEINWERFER**
VEHICLE HEADLIGHT
PROJECTEUR DE VÉHICULE

(30) Priorität: 13.06.2016 AT 505332016
(43) Veröffentlichungstag der Anmeldung: 17.04.2019
(73) Patentinhaber: ZKW Group GmbH, 3250 Wieselburg (AT)
(72) Erfinder: LAHMER, Martin, 3662 Münichreith (AT)
(74) Vertreter: Patentanwaltskanzlei Matschnig & Forsthuber OG
(86) Internationale Anmeldenummer: PCT/AT2017/060134
(87) Internationale Veröffentlichungsnummer: WO 2017/214648

(56) Entgegenhaltungen:
- EP-A2- 2 772 682
- WO-A1-2013/117923
- WO-A2-2015/032795
- DE-A1- 10 134 594
- DE-A1-102007 012 834
- DE-A1-102010 007 866
- DE-A1-102011 076 644
- DE-A1-102011 080 559
- DE-A1-102013 201 382
- DE-A1-102014 008 743
- DE-A1-102014 219 323
- US-A1- 2004 114 379

## Beschreibung

Die Erfindung betrifft einen Fahrzeugscheinwerfer, umfassend zumindest eine Lichtquelle, zumindest eine Projektionsoptik, zumindest eine Steuereinrichtung, zumindest eine Ausgabeeinheit sowie zumindest ein optoelektronisches Bauteil, das eine steuerbare Anordnung von mehreren, individuell verstellbaren optoelektronischen Elementen in Form einer zweidimensionalen Matrix umfasst, wobei eine Bildauflösung durch das Produkt aus der Anzahl von Zeilen und Spalten der Matrix definiert ist, und der Fahrzeugscheinwerfer dazu eingerichtet ist, Licht von der zumindest einen Lichtquelle in Richtung des zumindest einen optoelektronischen Bauteils abzustrahlen und mittels dem zumindest einen optoelektronischen Bauteil zu modulieren und zumindest teilweise in Richtung der zumindest einen Projektionsoptik zu strahlen und vor dem Fahrzeug ein Lichtbild auszubilden, wobei die zumindest eine Steuereinrichtung mit der zumindest einen Ausgabeeinheit verbunden ist, und die zumindest eine Ausgabeeinheit mit dem zumindest einen optoelektronischen Bauteil verbunden ist und die optoelektronische Elemente ansteuern kann.

Ferner betrifft die Erfindung ein Verfahren zur Erzeugung einer Lichtverteilung vor einem Fahrzeug durch einem Fahrzeugscheinwerfer der vorher genannten Art.

Bei der Entwicklung der gegenwärtigen Scheinwerfersysteme steht immer mehr der Wunsch im Vordergrund, ein möglichst hochaufgelöstes Lichtbild auf die Fahrbahn projizieren zu können, das rasch geändert und den jeweiligen Verkehrs-, Straßen- und Lichtbedingungen angepasst werden kann. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell wird das Lichtbild anhand einer Projektion auf eine vertikale Fläche entsprechend der einschlägigen Normen, die sich auf die KFZ-Beleuchtungstechnik beziehen, beschrieben.

Um diesem genannten Bedürfnis zu entsprechen, wurden unter anderem Scheinwerfer entwickelt, in denen eine variabel ansteuerbare Reflektorfläche aus einer Mehrzahl von Mikrospiegeln gebildet ist und eine Lichtemission, die von einer Lichtquelle erzeugt wird, in Abstrahlrichtung des Scheinwerfers reflektiert. Derartige Leuchteinrichtungen sind im Fahrzeugbau wegen ihrer sehr flexiblen Lichtfunktionen vorteilhaft, da für unterschiedliche Leuchtbereiche die Beleuchtungsstärke individuell geregelt werden kann und beliebige Lichtfunktionen mit unterschiedlichen Lichtverteilungen realisiert werden können, wie beispielsweise eine Abblendlicht-Lichtverteilung, eine Abbiegelicht-Lichtverteilung, eine Stadtlicht-Lichtverteilung, eine Autobahnlicht-Lichtverteilung, eine Kurvenlicht-Lichtverteilung, eine Fernlicht-Lichtverteilung oder die Abbildung von blendfreiem Fernlicht.

Für die Mikrospiegelanordnung kommt die sogenannte Digital Light Processing (DLP^{®}) Projektionstechnik zur Anwendung, bei der Bilder dadurch erzeugt werden, dass ein digitales Bild auf einen Lichtstrahl aufmoduliert wird. Dabei wird durch eine rechteckige Anordnung von beweglichen Mikrospiegeln, auch als Pixel bezeichnet, der Lichtstrahl in Teilbereiche zerlegt und anschließend pixelweise entweder in den Projektionsweg hinein oder aus dem Projektionsweg hinaus reflektiert.

Basis für diese Technik bildet ein elektronisches Bauteil, das die rechteckige Anordnung in Form einer Matrix von Spiegeln und deren Ansteuerungstechnik enthält und als "Digital Micromirror Device" (DMD) bezeichnet wird.

Bei einem DMD-Mikrosystem handelt es sich um einen Flächenlichtmodulator (Spatial Light Modulator, SLM), der aus matrixförmig angeordneten Mikrospiegelaktoren, das heißt verkippbaren spiegelnden Flächen besteht, beispielsweise mit einer Kantenlänge von etwa 16 µm. Die Spiegelflächen sind derart konstruiert, dass sie durch die Einwirkung elektrostatischer Felder beweglich sind. Jeder Mikrospiegel ist im Winkel einzeln verstellbar und weist in der Regel zwei stabile Endzustände auf, zwischen denen innerhalb einer Sekunde bis zu 5000 mal gewechselt werden kann. Die einzelnen Mikrospiegel können beispielsweise jeweils durch eine Pulsweiten-Modulation (PWM) angesteuert werden, um in der Hauptstrahlrichtung der DMD-Anordnung weitere Zustände der Mikrospiegel abzubilden, deren zeitlich gemittelte Reflektivität zwischen den beiden stabilen Zuständen des DMD liegt. Die Anzahl der Spiegel entspricht der Auflösung des projizierten Bilds, wobei ein Spiegel ein oder mehrere Pixel darstellen kann. Mittlerweile sind DMD-Chips mit hohen Auflösungen im Megapixel-Bereich erhältlich. Den verstellbaren Einzelspiegeln zugrunde liegende Technologie ist die Micro-Electro-Mechanical-Systems-(MEMS) Technologie. Fahrzeugscheinwerfer auf DMD-Basis sind aus der US 2004/114379 A1 bekannt.

Während die DMD-Technologie zwei stabile Spiegel-Zustände aufweist, und durch Modulation zwischen beiden stabilen Zuständen der Reflexionsfaktor eingestellt werden kann, weist die "Analog Micromirror Device" (AMD) Technologie die Eigenschaft auf, dass die Einzelspiegel in variablen Spiegelpositionen eingestellt werden können, die dort jeweils in einem stabilen Zustand sind

Bei derartigen Fahrzeugscheinwerfen, die mehrere verschiedene hochauflösende Lichtverteilungen auf die Fahrbahn vor dem Fahrzeug projizieren können, kommt es beispielsweise beim Wechsel zwischen verschiedenen Lichtverteilungen zu einem signifikanten Steuerungs- und Rechenaufwand, unter anderem wenn eine neue Lichtverteilung aus einem Speicher abgerufen wird und diese Vorgänge in Echtzeit innerhalb eines sehr kurzen Zeitfensters ausgeführt werden sollen. Steuereinrichtungen für Mikrospiegelanordnungen werden oft als "embedded system" realisiert. Oft werden derartige eingebettete Systeme speziell an eine Aufgabe angepasst und aus Kostengründen eine optimierte, gemischte Hardware-Software-Implementierung gewählt. Deshalb ist in der Praxis häufig die Rechenleistung sowie der verfügbare Speicher beschränkt. Es ist häufig ungünstig einen zusätzlichen externen Speicher zu verwenden, da nicht nur der Speicher selbst Kosten verursacht, sondern auch die Komplexität des "embedded system" signifikant erhöht wird, beziehungsweise in der für automobile Anwendungen benötigten Zertifizierung nicht am Markt verfügbar ist.

Es ist Aufgabe der Erfindung, die genannten Nachteile zu überwinden.

Die Aufgabe wird durch einen Scheinwerfer gemäß Anspruch 1 gelöst.

Durch die genannte Positionierung der Lichtmatrix innerhalb der Bildmatrix, die durch den Positionsparameter bestimmt ist, kann erreicht werden, dass ein gespeichertes Lichtmodell dazu verwendet werden kann, durch den erfindungsgemäßen Fahrzeugscheinwerfer in verschiedene Richtungen vor dem Fahrzeug gestrahlt zu werden. Das hat zum einen den Vorteil, dass eine manuelle Justierung des Fahrzeugscheinwerfers nach der Montage in einem Fahrzeug zumindest teilweise entfallen kann und die Justierung softwaregesteuert durchgeführt werden kann. Mit anderen Worten kann eine "virtuelle" Verschwenkbarkeit des Fahrzeugscheinwerfers erreicht werden. Zum anderen wird durch die softwaregesteuerte Verschiebbarkeit der Leuchtrichtung erreicht, dass der zur Adaptierung der Lichtverteilung benötigte Steuerungs- und Rechenaufwand minimal gehalten werden kann. Das wird dadurch erreicht, dass eine adaptierte Lichtverteilung nicht gesondert gespeichert sein muss, sondern durch Überlagerung zweier Matrizen sehr einfach gebildet werden kann. Die Überlagerung kann dabei additiv sein, das bedeutet, dass Bildmatrix eine Grundlichtverteilung umfassen kann oder keine Grundlichtverteilung vorsehen kann. Die Lichtmatrix, die der Bildmatrix überlagert wird, umfasst eine gewünschte Lichtverteilung, die aber gemäß der aktuellen Fahrsituation geeignet innerhalb der Bildmatrix angeordnet wird, indem die Werte der beiden Matrizen addiert werden oder die Werte der Lichtmatrix die Werte der Bildmatrix an der gewünschten Position, die durch den Positionsparameter bestimmt ist, überschrieben werden. Die dazu benötigten mathematischen Operatoren sind besonders einfach ausführbar und erfordern keine komplexen Programmierroutinen im Programmcode. Wird die Lichtmatrix dynamisch während der Fahrt des Fahrzeugs verschwenkt ist darauf zu achten, dass bevor die Leichtmatrix gemäß dem aktuellen Positionsparameter neu angeordnet wird, die zuvor berechnete Bildmatrix, in die die zuvor genützte Lichtmatrix eingebettet ist, entfernt wird. Dies kann beispielsweise derart erfolgen, dass die zuvor genützte Lichtmatrix subtraktiv unter Verwendung des zuvor genützten Positionsparameters entfernt wird. Alternativ kann die ursprüngliche Form, das heißt die Grundeinstellung der Bildmatrix gesondert gespeichert werden, beispielsweise als Grundmatrix, die der Größe der Bildmatrix entspricht, um die Bildmatrix neu aus Grundmatrix und Lichtmatrix zusammenzusetzen. Dadurch kann der Rechenaufwand nochmals reduziert werden, wobei der Speicherbedarf im Gegenzug ansteigt.

Ferner wird die Aufgabe durch ein Verfahren gemäß Anspruch 6 gelöst. Die aus dem Verfahren resultierenden Vorteile entsprechen jenen des erfindungsgemäßen Fahrzeugscheinwerfers, sodass im Weiteren nur die Vorteile des Fahrzeugscheinwerfers ausgeführt sind und die erzielten Vorteile entsprechend auch für das erfindungsgemäße Verfahren gelten.

Es ist vorteilhaft, wenn die Bildmatrix eine Fläche beschreibt, die größer ist, bevorzugt zumindest doppelt so groß, besonders bevorzugt zumindest dreimal so groß ist, als die Fläche, die die Lichtmatrix beschreibt. Dadurch kann erreicht werden, dass der Bereich, innerhalb dem eine Verschwenkbarkeit des Fahrzeugscheinwerfers erzielt wird, besonders groß ist und auch Bereiche durch den Fahrzeugscheinwerfer beleuchtet werden können, die abseits der Fahrbahn, auf der sich das Fahrzeug befindet, gelegen sein können. Ist die Fläche, die durch die Bildmatrix beschrieben wird in vertikaler Richtung größer als die Fläche, die durch die Lichtmatrix beschrieben ist, so kann beispielsweise die Leuchtweite des Fahrzeugscheinwerfers eingestellt werden. Ist die Fläche, die durch die Bildmatrix beschrieben wird in horizontaler Richtung größer als die Fläche, die durch die Lichtmatrix beschrieben ist, so kann beispielsweise die zu beleuchtende Fahrspur des Fahrzeugscheinwerfers eingestellt werden.

Es ist ebenso vorteilhaft, wenn die Bildmatrix eine Fläche beschreibt, die kleiner ist, bevorzugt höchstens halb so groß, besonders bevorzugt höchstens ein Drittel so groß ist, als die Fläche, die die Lichtmatrix beschreibt. Dadurch kann erreicht werden, dass eine sehr großflächige Lichtverteilung durch die Lichtverteilung definiert werden kann und sich diese Lichtverteilung trotzdem bis zum Rand der Bildmatrix erstreckt, auch wenn die Lichtmatrix am Rand der Bildmatrix positioniert wird, wie beispielsweise bei einer Kurvenlichtfunktion.

Die Vorteile der Erfindung lassen sich besonders einfach erzielen, wenn das zumindest eine Lichtmodell eine Lichtverteilung für einen Fahrzeugscheinwerfer definiert, bevorzugt eine Lichtverteilung eines Abblendlichts oder eines Fernlichts. Dies ist deshalb der Fall, da durch die genannten beiden Lichtverteilungen, die am häufigsten im Betrieb eines Fahrzeuges eingesetzt werden, besonders einfach an zusätzliche Beleuchtungserfordernisse, die beispielsweise aufgrund einer besonderen Verkehrssituation oder einer geänderten Einbaulage in einem Fahrzeug erforderlich sein können, angepasst werden können.

In einer bevorzugten Ausführung der Erfindung können unterschiedliche Beladungszustände des Fahrzeugs in der Ausrichtung des Fahrzeugscheinwerfers berücksichtigen werden, indem der Positionsparameter in Abhängigkeit des Beladungszustands des Fahrzeugs verändert wird, wobei die Lichtmatrix innerhalb der Bildmatrix vorzugsweise vertikal verschoben wird, wodurch eine vertikale Fehlstellung der Abstrahlrichtung der Fahrzeugscheinwerfer, die durch eine erhöhte Zuladung am Fahrzeugheck hervorgerufen sein kann, korrigiert werden kann.

In einer bevorzugten Ausführung der Erfindung wird der Positionsparameter in Abhängigkeit des Lenkwinkels des Fahrzeugs verändert, wobei die Lichtmatrix innerhalb der Bildmatrix vorzugsweise horizontal verschoben wird und vorzugsweise eine Kurvenlicht-Lichtfunktion eines Fahrzeugscheinwerfers gebildet werden kann. Die derart korrigierte Abstrahlrichtung der Fahrzeugscheinwerfer kann folglich dem Straßenverlauf folgend ausleuchten, der durch den Einschlag des Lenkrades des Fahrzeugs bestimmt ist.

Alternativ oder zusätzlich kann in einer Weiterbildung der Erfindung aus Navigationsdaten oder Karten des Straßenverlaufs der Kurvenverlauf bestimmt werden und der Positionsparameter in Abhängigkeit des so bestimmten Kurvenverlaufs verändert, wobei die Lichtmatrix innerhalb der Bildmatrix vorzugsweise horizontal verschoben wird und vorzugsweise eine Kurvenlicht-Lichtfunktion oder eine Leuchtweiteregulierung eines Fahrzeugscheinwerfers gebildet werden kann. Durch die derart ausgeführte Kurvenlichtfunktion oder Leuchtweiteregulierung kann diese schon viel früher aktiviert und eingesetzt werden, bevor das Fahrzeug oder der Lenker auf den Straßenverlauf reagieren muss. Dadurch wird der Sicherheitsaspekt durch die geschaffene Lichtfunktion weiter verbessert.

In einer weiteren bevorzugten Ausführung der Erfindung wird der Positionsparameter in Abhängigkeit des Straßenverlaufs, der vorzugsweise aus Navigationsdaten des Fahrzeugs bestimmbar ist, verändert, wobei die Lichtmatrix innerhalb der Bildmatrix vorzugsweise vertikal verschoben wird. Aus Navigationsdaten kann der Straßenverlauf ersichtlich sein, der unmittelbar vor dem Fahrzeug liegt. So können Geländekuppen oder Geländesenken, besonders lange gerade Streckenverläufe der Straße vorab erkannt werden. Diese Informationen können an die Fahrzeugscheinwerfer weitergegeben werden, um diesen auf die vor dem Fahrzeug liegenden Streckenabschnitte einzustellen.

Im Falle einer vor dem Fahrzeug befindlichen Geländekuppe können die Fahrzeugscheinwerfer eingestellt werden, wobei die Abstrahlrichtung der Fahrzeugscheinwerfer gesenkt wird, um den Gegenverkehr nicht über Gebühr zu blenden.

Im Fall einer vor dem Fahrzeug befindlichen Geländesenke oder im Falle eines vor dem Fahrzeug befindlichen geraden Streckenabschnitts können die Fahrzeugscheinwerfer eingestellt werden, wobei die Abstrahlrichtung der Fahrzeugscheinwerfer angehoben wird, um die Sicht für den Fahrer des Fahrzeugs zu verbessern.

In einer weiteren bevorzugten Ausführung der Erfindung wird der Positionsparameter in Abhängigkeit der Fahrgeschwindigkeit des Fahrzeugs verändert, wobei die Lichtmatrix innerhalb der Bildmatrix vorzugsweise vertikal verschoben wird. Folglich können die Fahrzeugscheinwerfer eingestellt werden, wobei die Abstrahlrichtung der Fahrzeugscheinwerfer angehoben wird, um die Sicht bei höherer Geschwindigkeit für den Fahrer des Fahrzeugs zu verbessern.

In einer weiteren bevorzugten Ausführung der Erfindung wird der Positionsparameter in Abhängigkeit der Witterung in der Umgebung der Fahrbahn, insbesondere durch die Temperatur, die Luftfeuchtigkeit oder die Sichtbedingungen für den Fahrer, die durch fahrzeugseitige Sensoren bestimmbar sind, verändert, wobei die Lichtmatrix innerhalb der Bildmatrix vorzugsweise vertikal verschoben wird. Durch die witterungsabhängige Einstellung der Abstrahlrichtung der Fahrzeugscheinwerfer kann erreicht werden, dass die Sicht für den Fahrer des Fahrzeugs verbessert wird indem die Abstrahlrichtung der Fahrzeugscheinwerfer angehoben oder abgesenkt wird.

Die vorherrschenden Witterungsbedingungen für das Fahrzeug können durch verschiedene fahrzeugseitige Sensoren bestimmt werden. Die Temperatur kann durch Temperatursensoren bestimmt werden und die Luftfeuchtigkeit entweder durch entsprechende Sensoren oder beispielsweise indirekt durch den Benützungsstatus von Scheibenwischern. Die Sichtbedingungen können beispielsweise durch Regelsensoren ermittelt werden. Alternativ können die Witterungsbedingungen, beispielsweise Glatteiswarnungen, Nebelwarnungen oder Schneeberichte beispielsweise von Wetterdiensten elektronisch über eine mobile Datenanbindung an das Fahrzeugs übermittelt werden und dazu herangezogen werden, eine witterungsabhängige Einstellung der Fahrzeugscheinwerfer durchzuführen.

Gemäß der Erfindung wird der Positionsparameter in Abhängigkeit von Verkehrsnachrichten, die durch Empfangseinrichtungen des Fahrzeugs empfangen werden können, verändert wird, wobei die Lichtmatrix innerhalb der Bildmatrix vorzugsweise vertikal verschoben wird. So kann die aktuelle Verkehrslage, wie beispielsweise Stau mit Stop&Go-Verkehr, auf der Strecke befindliche Sondertransporter, Unfallbereiche, etc. elektronisch über eine mobile Datenanbindung an das Fahrzeugs übermittelt werden und dazu herangezogen werden, eine verkehrsabhängige Einstellung der Fahrzeugscheinwerfer durchzuführen.

Als mobile Datenanbindung des Fahrzeugs sind Mobilfunkverbindungen vorzugsweise nach dem GSM, 3G/ UMTS, 4G/ LTE oder 5G Mobilfunkstandard geeignet, aber auch Fahrzeug-zu-Fahrzeugverbindungen nach dem IEEE 802.11p Standard (WAVE, "Wireless Access in Vehicular Environment") oder nach dem entsprechenden ETSI/ CEN ITS-G5 Standard (IEEE 1609) oder nach dem SAE Standard J2735. Folglich kann der Positionsparameter von BSM ("Basic Satefy Message"), CAM ("Cooperative Awareness Message") oder DENM ("Decentralized Awareness Message") Nachrichten gesteuert werden. Grundsätzlich sind auch andere Funkstandards geeignet, wie nach dem CEN/ ISO DSRC Standard ("Dedicated Short Range Communication") im 5.8 GHz-Mikrowellen- und Infrarot-Bereich.

Verkehrsnachrichten können beispielsweise auch über TMC ("Traffic Message Channel"), den Radiosendern häufig zur Übermittlung von Verkehrsnachrichten ausstrahlen, im Fahrzeug empfangen können
Es ist klar, dass die genannten Abhängigkeiten des Positionsparameters untereinander kombinierbar sind. Beispielsweise ist eine Kombination der genannten Kurvenlichtfunktion mit einem geschwindigkeitsabhängigen Positionsparameter möglich.

Durch Einsatz der DLP^{®} Projektionstechnik ist es möglich, nicht nur flexible Lichtverteilungen auf die Fahrbahn von dem Fahrzeug zu projizieren, sondern auch Lichtfunktionen in Form von gezielten Informationen ("Advanced Information Beam^{™}", AIB^{™}), wie beispielsweise Verkehrszeichen, Warnhinweise (Warndreiecke, Ausrufzeichen) oder auch Hinweise oder Markierungen für die Navigation. Es ist besonders vorteilhaft, wenn diese projizierten Informationen rasch an die aktuelle Situation im Straßenverkehr oder innerhalb der Navigation angepasst werden können. In einem weiteren Aspekt der Erfindung ist zumindest ein Lichtmodell durch eine Matrix von Helligkeitswerten einer Lichtverteilung definiert, die vorzugsweise der Lichtmatrix entspricht. Durch diese besonders einfache Definition eines Lichtmodells kann dieses sehr variabel definiert werden, was allerdings einen erhöhten Speicherbedarf mit sich bringt.

Zusätzlich ist zumindest ein Lichtmodell durch eine zweidimensionale Funktion, die durch eine Vielzahl von Stützstellen, die Helligkeitswerte einer Lichtverteilung definieren, beschreibbar, was vorteilhaft ist, da der benötigte Speicherbedarf zur Speicherung einer Lichtverteilung in der Steuereinrichtung wesentlich geringen sein kann.

In einer Weiterentwicklung wird die zweidimensionale Funktion durch Interpolation zwischen den Stützstellen in die Lichtmatrix abgebildet, was besonders vorteilhaft ist, da gleichmäßig verlaufende Lichtverteilungen bei geringem Speicherbedarf erzeugt werden können.

Es ist ausgesprochen vorteilhaft, wenn die zumindest eine Lichtquelle eine Halbleiter-Leuchtdiode, insbesondere eine Hochstrom-Leuchtdiode oder eine Laser-Diode umfasst, da eine geringe Baugröße im Fahrzeugscheinwerfer erzielt werden kann. Außerdem wird das Licht mit hohem Wirkungsgrad erzeugt und die Abwärme der Lichtquelle reduziert, was speziell bei der Verwendung von temperatursensitiven AMDs oder DMDs sehr wichtig ist.

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in:
- Fig. 1: eine perspektivische Darstellung einer ersten Ausführungsform eines Fahrzeugscheinwerfers nach der Erfindung,
- Fig. 2: eine perspektivische Darstellung einer zweiten Ausführungsform eines Fahrzeugscheinwerfers nach der Erfindung,
- Fig. 3: eine Ansicht von vorne auf ein optoelektronisches Bauteil mit einer vergrößerten Detaildarstellung enthaltener optoelektronischer Elemente,
- Fig. 4: ein Blockschaltbild eines erfindungsgemäßen Fahrzeugscheinwerfers,
- Fig. 5: einen zeitlichen Verlauf von Signalen zur Steuerung des optoelektronischen Bauteils nach Fig. 4,
- Fig. 6: eine perspektivische Darstellung einer berechneten Lichtverteilung eines erfindungsgemäßen Fahrzeugscheinwerfers,
- Fig. 7: eine Darstellung einer Lichtverteilung eines erfindungsgemäßen Fahrzeugscheinwerfers,
- Fig. 8: eine Darstellung einer Bildmatrix eines erfindungsgemäßen Fahrzeugscheinwerfers,
- Fig. 9: eine Darstellung einer variablen Abblendlicht-Lichtverteilung eines erfindungsgemäßen Fahrzeugscheinwerfers in einer Geradeaus-Stellung,
- Fig. 10: eine Darstellung einer Abblendlicht-Lichtverteilung eines Kurvenlichts mit einem erfindungsgemäßen Fahrzeugscheinwerfer,
- Fig. 11: eine Darstellung einer variablen Fernlicht-Lichtverteilung eines erfindungsgemäßen Fahrzeugscheinwerfers in einer Geradeaus-Stellung,
- Fig. 12: eine Darstellung einer Abblendlicht-Lichtverteilung eines Kurvenlichts mit einem erfindungsgemäßen Fahrzeugscheinwerfer,
- Fig. 13: eine Darstellung einer Abblendlicht-Lichtverteilung, in der der Bereich eines entgegenkommenden Fahrzeugs nicht beleuchtet ist,
- Fig. 14: eine Darstellung einer Abblendlicht-Lichtverteilung, in der sich ein Tier in Richtung der Fahrbahn bewegt,
- Fig. 15: eine Darstellung einer Abblendlicht-Lichtverteilung, in der Informationen in den Bereich projiziert werden.

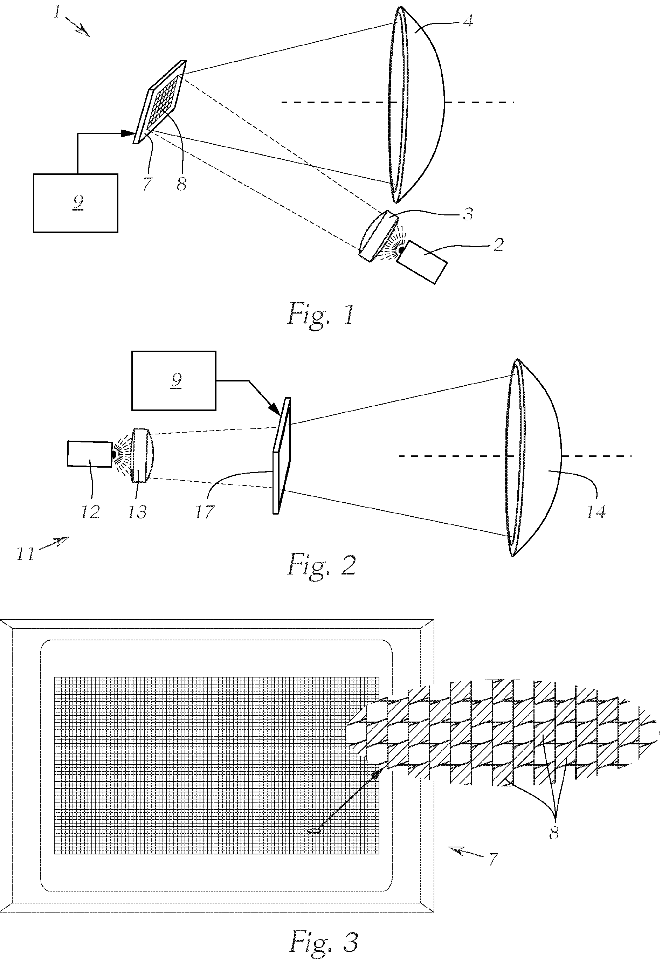

Unter Bezugnahme auf **Fig. 1** bis **Fig. 12** werden nun Ausführungsbeispiele der Erfindung näher erläutert. Insbesondere sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. Der Übersichtlichkeit halber sind daher beispielsweise Kühlvorrichtungen für Bauteile, Ansteuerungselektronik, weitere optische Elemente, mechanische Verstelleinrichtungen beziehungsweise Halterungen nicht gezeigt.

Die Ausführungsbeispiele illustrieren zugleich das erfindungsgemäße Verfahren zur Erzeugung einer Lichtverteilung vor einem Fahrzeug durch einem Fahrzeugscheinwerfer der hier beschriebenen Art. Es ist klar, dass die Ausführungsbeispiele und deren Merkmale sowohl einzeln die Erfindung abbilden, als auch untereinander einfach oder mehrfach kombinierbar sind. So ist beispielsweise eine Kombination einer Kurvenlichtfunktion mit einer Funktion zur Regelung der Lichtabstrahlrichtung in Abhängigkeit des Beladungszustands des Fahrzeugs sowie dem Streckenverlauf der Straße sehr praktikabel.

**Fig. 1** zeigt eine erste Ausführungsform eines Fahrzugscheinwerfers 1 nach der Erfindung. Eine Lichtquelle 2, die beispielsweise eine Leuchtdiode oder Power-LED sowie eine Primäroptik 3 zur Bündelung eines Lichtstrahls enthalten kann, ist dazu eingerichtet, ein optoelektronisches Bauteil 7 zu beleuchten.

Das optoelektronische Bauteil 7 kann mehrere, in einer zweidimensionalen Matrix angeordnete optoelektronische Elemente 8 umfassen. In diesem ersten Ausführungsbeispiel sind die optoelektronischen Elemente 8 einzeln ansteuerbare Mikrospiegel, bei denen die Reflexionswirkung jedes einzelnen Elements der Matrix variabel einstellbar ist (beispielsweise ein AMD oder DMD).

Das optoelektronische Bauteil 7 kann das einfallende Licht in Richtung einer Projektionsoptik 4 reflektieren, wobei die gesteuerten Matrixelemente individuell deren Reflexionsfaktor durch Modulation der Winkel der Mikrospiegel einstellen und eine gewünschte Lichtverteilung auf den einfallenden Lichtstrahl modulieren. Die Projektionsoptik 4 ist in die Abstrahlrichtung des Fahrzeugscheinwerfers 1 orientiert und erzeugt folglich die gewünschte Lichtverteilung vor dem Fahrzeug.

Die Ansteuerung des optoelektronischen Bauteils 7 erfolgt durch die Ansteuerungseinheit 9, in der eine gewünschte Lichtverteilung berechnet werden kann und in die dazu erforderliche Ansteuerung der optoelektronischen Elemente 8 in Form von Steuersignalen an das optoelektronische Bauteil 7 ausgegeben werden.

**Fig. 2** zeigt eine zweite Ausführungsform eines Fahrzugscheinwerfers 11 nach der Erfindung. Eine Lichtquelle 12, die beispielsweise eine Leuchtdiode, Hochstrom-LED (Power-LED) oder eine Laser-Diode sowie eine Primäroptik 13 zur Bündelung des von der Lichtquelle 12 ausgehenden Lichtstrahls enthalten kann, ist dazu eingerichtet, ein optoelektronisches Bauteil 17 zu beleuchten.

Das optoelektronische Bauteil 17 umfasst mehrere, in einer zweidimensionalen Matrix angeordnete optoelektronische Elemente. In diesem zweiten Ausführungsbeispiel sind die optoelektronischen Elemente 8 einzeln ansteuerbare lichtdurchlässige Elemente, bei denen die Lichtdurchlasswirkung jedes einzelnen Elements der Matrix variabel einstellbar ist (beispielsweise ein LCD).

Das optoelektronische Bauteil 17 kann das einfallende Licht in Richtung einer Projektionsoptik 14 durchlassen, wobei die gesteuerten Matrixelemente individuell deren Lichtdurchlässigkeit einstellen und eine gewünschte Lichtverteilung auf den einfallenden Lichtstrahl modulieren. Die Projektionsoptik 14 ist in die Abstrahlrichtung des Fahrzeugscheinwerfers 11 orientiert und erzeugt folglich die gewünschte Lichtverteilung vor dem Fahrzeug.

Die Ansteuerung des optoelektronischen Bauteils 17 erfolgt durch die Ansteuerungseinheit 19, in der eine Lichtverteilung berechnet werden kann und die dazu erforderliche Ansteuerung der optoelektronischen Elemente, beispielsweise die Pixel eines LCD, in Form von Steuersignalen an das optoelektronische Bauteil 17 ausgegeben werden

Neben den in Fig. 1 und Fig. 2 gezeigt gezeigten Varianten des optoelektronische Bauteils 7, 17 können natürlich auch andere Technologien eingesetzt werden, die eine entsprechende Modulation des Lichtes ermöglichen. Der Vollständigkeit halber sollen daher auch LCoS Systeme (LCoS, "Liquid Crystal on Silicon") genannt werden.

Die Modulation des Lichts ermöglicht eine Segmentierung der Lichtverteilung auf der Fahrbahn, das heißt die auf die Fahrbahn projizierte Lichtverteilung kann für verschiedene Raumwinkel individuell gesteuert werden. Für ein auf eine Fahrbahn projiziertes Lichtbild ist die Anzahl von Segmenten wichtig, die individuell durch einen erfindungsgemäßen Fahrzeugscheinwerfer angesteuert werden können, um für verschiedene Fahrsituationen individuell angepasste Lichtverteilungen zu erzeugen. Die Anzahl dieser Segmente ist beispielsweise von der Anzahl der Mikrospiegel abhängig und beträgt beispielsweise 854 x 480 Mikrospiegel oder Pixel in rechteckiger Matrix-Anordnung.

Werden für Fahrzeuge zwei Scheinwerfer verwendet, können die Segmente aneinandergereiht und die Anzahl der Segmente verdoppelt werden. Üblicherweise werden in Einbaulage des Fahrzeugscheinwerfers mehr Segmente in horizontaler als in vertikaler Richtung benötigt. Aus diesem Grund werden in der Praxis häufig die durch die optoelektronischen Bauteile segmentierten Lichtverteilungen von zwei Fahrzeugscheinwerfer an den kurzen Seiten der Matrixanordnung aneinandergereiht und damit die horizontale Auflösung verdoppelt.

Es ist auch eine vollständige oder auch nur teilweise Überlagerung beziehungsweise Überlappung zweier oder mehrerer Lichtverteilungen möglich, um beispielsweise einen stärkeren Kontrast in Bildbereichen zu erzielen.

In **Fig. 3** ist ein Beispiel eines optoelektronischen Bauteils 7 in Form eines DMD in Vorderansicht gezeigt. Ein vergrößerter Bildausschnitt zeigt matrixförmig angeordnete optoelektronische Elemente 8, die einzeln steuerbare Mikrospiegel umfassen, wobei in diesem Beispiel jeder zweite Mikrospiegel verkippt ist.

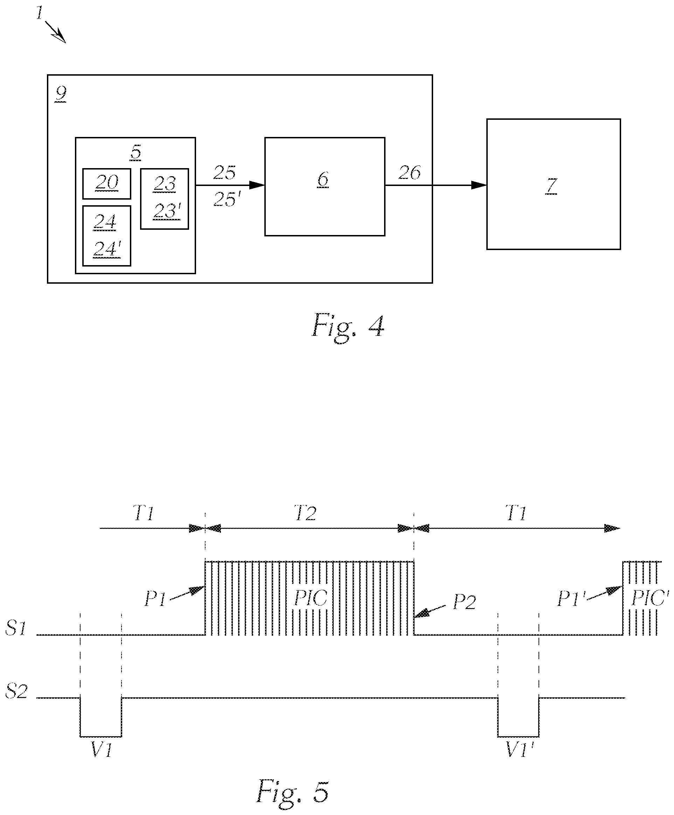

**Fig. 4** zeigt ein elektrisches Blockschaltbild des erfindungsgemäßen Fahrzeugscheinwerfers 1. Eine Steuereinrichtung 5 kann aus einem Lichtmodell 20 eine Lichtverteilung in Form von Bilddaten 25, 25' berechnen und über eine Ausgabeeinheit 6 in Form von Videosignalen 26 an das optoelektronische Bauteil 7 ausgeben. Die Steuereinrichtung 5 bildet gemeinsam mit der Ausgabeeinheit 6 die Ansteuerungseinheit 9, an die das optoelektronische Bauteil 7 angeschlossen ist. Die Steuereinrichtung 5 kann aus zumindest einem Lichtmodell 20 eine Lichtmatrix 23, 23' erzeugen, nachfolgend mit zumindest einem Positionsparameter 24, 24' eine Lichtverteilung in Form einer Bildmatrix als Bilddaten 25, 25' berechnen und über eine Ausgabeeinheit 6 in Form von Videosignalen 26 an das optoelektronisches Bauteil 7 ausgeben. Der von der Steuereinrichtung 5 benötigte Speicher kann sowohl auf einem Mikroprozessor-Chip als auch auf einem gesonderten Chip oder Speicher-Chip gelegen sein. Zusätzlich kann die Steuereinrichtung 5 eine Schnittstelle umfassen, über die beispielsweise Lichtmodelle 20 an die Steuereinrichtung 5 übermittelt werden können.

In **Fig. 5** sind Signalverläufe im Zeitbereich für ein Datensignal S1 sowie ein V-Sync Steuersignal S2 mit Synchronisationsimpulsen V1, V1' eines Videosignals dargestellt. Die Steuereinrichtung 5 führt wiederholt Neuberechnungen der gewünschten Lichtverteilung durch, um der jeweiligen Fahrsituation des Fahrzeugs gerecht zu werden und die jeweils benötigte Lichtverteilung zu berechnen. Die Steuereinrichtung 5 überträgt die berechnete Lichtverteilung in Form einer Bildmatrix 25 an die Ausgabeeinheit 6, die wiederum die Bilddaten in Form von Videosignalen 26, umfassend ein Datensignal S1 und ein V-Sync Signal S2 an das optoelektronische Bauteil 7 überträgt. Häufig weisen Videosignale 22 eine Signalfrequenz auf, um beispielsweise eine Bildwiederholfrequenz von beispielsweise 25 Bildern pro Sekunde zu erreichen. Zur Veranschaulichung sind in Fig. 5 zwei aufeinander folgende Zeitfenster T1 und T2 gezeigt. Das Zeitfenster T1 beginnt mit einem Ende einer Übertragung von Bildinformation und dauert bis zum Beginn der Übertragung von darauf folgenden Bildinformationen der Bilddaten 21 im Datensignal S1. Das Zeitfenster T2 beginnt nach dem Ende des Zeitfensters T1 und dauert bis zum Ende der Übertragung von Bildinformationen aus den Bilddaten 21 im Datensignal S1.

Mit anderen Worten ist die Ausgabeeinheit 6 eingerichtet Bildsignale mittels zumindest einem Datensignal S1 zu dem optoelektronischen Bauteil 7, 17 zu übertragen und das zumindest eine Datensignal S1 schließt ein Zeitfenster T2 ein, das zwischen einer vorderen Signal-Schulter P1 und einer hinteren Signal-Schulter P2 der Bildinformationen PIC im Datensignal S1 gelegen ist. Das Zeitfenster T1 ist zwischen einer hinteren Signal-Schulter P2 der Bildinformationen PIC und einer vorderen Signal-Schulter P1' der darauf folgenden Bildinformationen PIC' im Datensignal S1 gelegen.

Jede Fahrsituation kann eine Neuberechnung der Lichtverteilung erfordern, beispielsweise wenn ein Fahrer eines Fahrzeugs von einer Abblendlicht-Funktion zu einer Fernlicht-Funktion des Fahrzeugscheinwerfers wechselt. Dieser Wechsel muss sehr rasch erfolgen, wobei die für diesen Vorgang erforderliche Rechenkapazität der Steuereinrichtung 5 berücksichtigt werden sollte. Dabei ist es besonders günstig, wenn die Berechnung der Situationslichtverteilung im Zeitfenster T1 durchgeführt wird, da zu dieser Zeit keine Bilddaten übertragen werden und Rechenkapazität seitens der Steuereinrichtung 5 verfügbar sein kann. Das Zeitfenster T1 liegt zwischen jeder hinteren Signal-Schulter P2 ("back porch") und vorderen Signal-Schulter P1' ("front porch"). Abhängig von einer gewünschten Bildwiderholrate bleiben für die Berechnung der Lichtverteilung nur wenige Millisekunden im Zeitfenster T1. Beispielsweise beträgt das Zeitfenster T1 bei einem Videosignal, das Bildinformationen von 640x480 Pixel umfasst und eine Bildwiederholrate von 60Hz aufweist, in etwa 1.4 ms zwischen der hinteren Signal-Schulter P2 der Bildinformationen PIC und der vorderen Signal-Schulter P1' der darauf folgenden Bildinformationen PIC'.

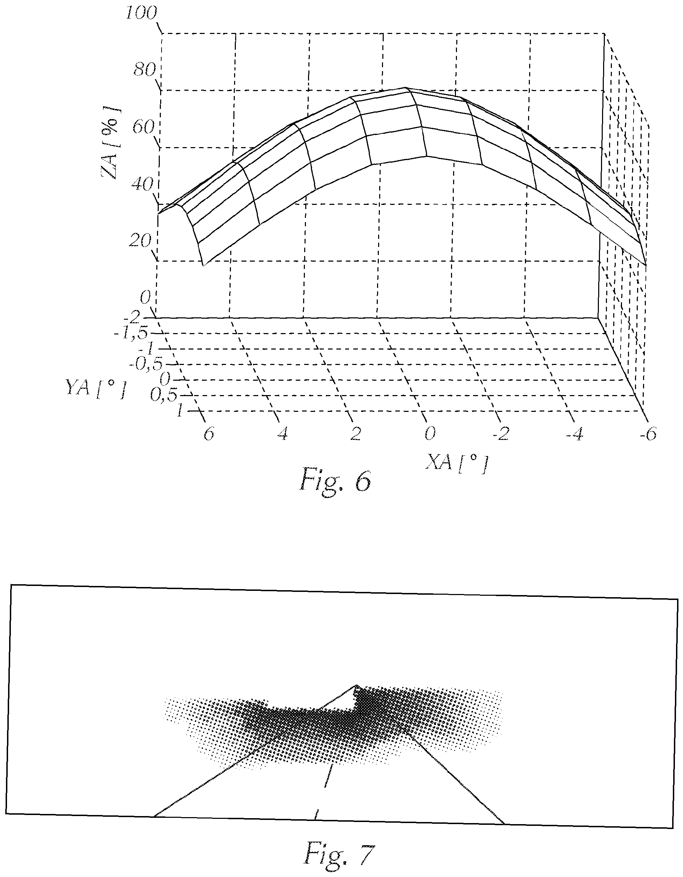

**Fig. 6** zeigt eine räumliche Darstellung eines Beispiels für eine berechnete Lichtverteilung, beispielsweise die eines Fernlichtes. Auf den Achsen des gezeigten Koordinatensystems sind auf den Achsen XA und YA die horizontale und vertikale Position des jeweiligen Helligkeitswerts (oder Dimmwerts), der auf der Achse ZA aufgetragen ist, gezeigt.

Andere Lichtverteilungen sind genauso möglich, wie die Lichtverteilung eines Abblendlichts, eines Kurvenlichts, etc.

Die Lichtverteilung kann durch Stützstellen beschrieben werden. Jede Stützstelle umfasst beispielsweise einen Datensatz (X, Y, Z), wobei Z der gewünschte Helligkeitswert in der Position (X, Y) ist. Durch Interpolation zwischen den Stützstellen können weitere Helligkeitswerte berechnet werden. Die Lichtverteilung kann durch Stützstellen beschrieben werden, wobei beispielsweise durch Interpolation zwischen den Stützstellen weitere Funktionswerte berechnet werden können. Es sind dabei unterschiedliche Interpolationsverfahren möglich. Bei Verwendung einer linearen Interpolation werden die Steigungen zwischen den Stützstellen berechnet und bei der Berechnung von Punkten, die zwischen den einzelnen Stützstellen liegen, werden die jeweiligen gleichen Steigungen eingesetzt, um die Berechnung selbst besonders einfach zu halten. Dies kann erforderlich sein, falls die Rechenkapazität der Steuereinrichtung 5 begrenzt ist. Das Zeitfenster T1 liegt zur Berechnung besonders günstig und kann vorteilhaft genutzt werden, indem im Zeitfenster T1 Berechnungen für Lichtverteilungen durchgeführt werden.

Die Werte der einzelnen Matrixelemente des optoelektronischen Bauteils 7, 17 können einer absoluten oder relativen Helligkeit in der berechneten Lichtverteilung entsprechen. Ferner können die Werte einem Einstellwert eines jeweiligen optoelektronischen Elements 8 entsprechen, beispielsweise Werte zwischen 0 und 255, dem Reflexionsfaktor oder Helligkeitswerte beziehungsweise Dimmwerte zwischen 0% für dunkel oder 100% für hell. Je nach Definition dieser Werte, die durch das DMD System vorgegeben ist, kann es notwendig sein, dass das optoelektronische Bauteil 7 eine Anpassung auf Einstellbereiche der optoelektronischen Elemente 8 vornimmt.

Bei manchen DMD Systemen erfolgt die Modulation des Lichts durch hochfrequente Verkippung der jeweiligen Mikrospiegel im Sinne einer Pulsweiten-Modulation (PWM), wobei der Arbeitszyklus ("duty cycle") angepasst wird, beispielsweise für eine Dimmung von 70% die Mikrospiegel im Takt 70/30 zwischen zwei stabilen Spiegelzuständen bewegt werden. Gebräuchlich sind Kippfrequenzen von bis zu 200Hz, 1kHz oder 10kHz. Alternativ können die Einstellwerte der einzelnen Matrixelemente des optoelektronischen Bauteils 7, 17 den Stellungen von Mikrospiegeln oder Kippfrequenzen der Mikrospiegel entsprechen.

**Fig. 7** zeigt beispielhaft ein durch die erfindungsgemäße Anordnung erzeugte hochaufgelöste Lichtverteilung eines Abblendlichts auf einer Straße, wobei dunkel gezeigte Bereiche für Bereiche hoher Helligkeit stehen. Die gezeigte Darstellung ist demnach invers zu einer Helligkeitsverteilung.

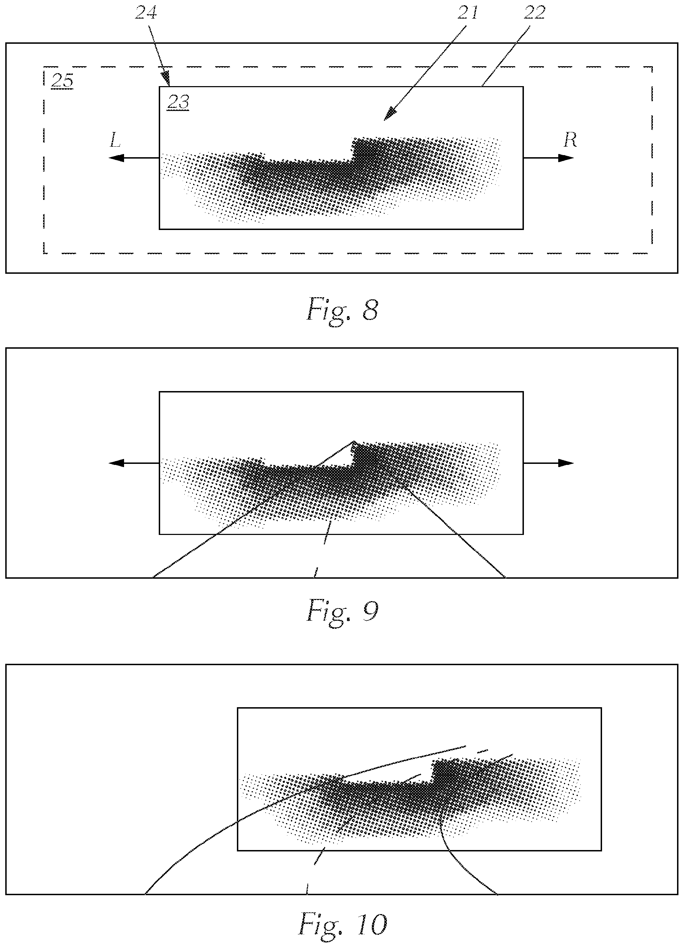

**Fig. 8** stellt ein Lichtmodell in Form einer Lichtverteilung 21 (hier ist eine Abblendlicht-Lichtverteilung gezeigt) dar, die einen Leuchtbereich 22 aufweist. Das Lichtmodell 20 ist durch eine Lichtmatrix 23 beschreibbar. Die Umrandung der Bildmatrix 25 zeigt den Einstell- oder Verschiebebereich der Lichtmatrix 23 innerhalb der Bildmatrix 25 und somit den Einstellbereich des Fahrzeugscheinwerfers. Ein Positionsparameter 24 verweist auf die Lage der Lichtmatrix 23 innerhalb einer Bildmatrix 25, in der die Lichtmatrix 23 angeordnet ist. Die Pfeile L und R deuten an, wie die Lichtmatrix 23 innerhalb der Bildmatrix 25 verschoben werden kann, um beispielsweise die Funktion eines Kurvenlichts umzusetzen. Der Positionsparameter 24 definiert in diesem Beispiel die Lage der linken oberen Ecke der Lichtmatrix 23 innerhalb der Bildmatrix 25. Selbstverständlich ist es frei wählbar, welcher Referenzpunkt der Lichtmatrix 23 zur Positionierung herangezogen wird. Es ist also wählbar, ob der Positionsparameter 24 eine Ecke oder den Mittelpunkt oder eine beliebige andere Stelle der Lichtmatrix 23 referenziert.

**Fig. 9** und **Fig. 10** zeigen die Funktion eines Kurvenlichts mit einer Abblendlicht-Lichtverteilung, das gemäß den Pfeilen L und R vertikal verschiebbar ist auf einem gerade und gekrümmten Streckenverlauf der Straße.

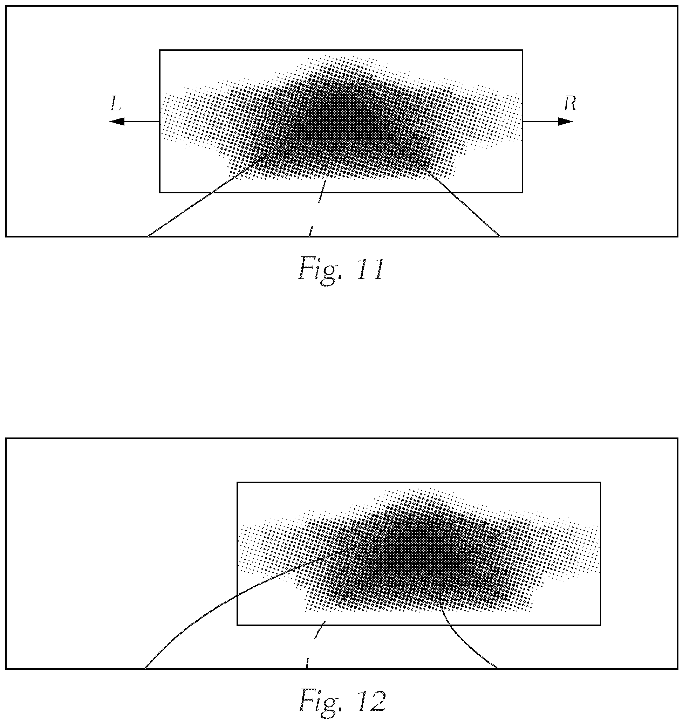

**Fig. 11** und **Fig. 12** zeigen die Funktion eines Kurvenlichts mit einer Fernlicht-Lichtverteilung, das gemäß den Pfeilen L und R vertikal verschiebbar ist auf einem gerade und gekrümmten Streckenverlauf der Straße.

Dabei kann der der Positionsparameter 24 in Abhängigkeit des Lenkwinkels des Fahrzeugs verändert werden, wobei die Lichtmatrix 23 innerhalb der Bildmatrix 25 vorzugsweise horizontal verschoben wird und vorzugsweise eine Kurvenlicht-Lichtfunktion eines Fahrzeugscheinwerfers gebildet werden kann.

Alternativ kann der erfindungsgemäße Fahrzeugscheinwerfer eingesetzt werden, um Lichtfunktionen bereitzustellen, wobei der Positionsparameter 24 in Abhängigkeit von
- dem Beladungszustand des Fahrzeugs oder
- dem Straßenverlauf, der vorzugsweise aus Navigationsdaten des Fahrzeugs bestimmbar ist, oder
- der Fahrgeschwindigkeit des Fahrzeugs, oder
- der Witterung in der Umgebung der Fahrbahn, insbesondere durch die Temperatur, die Luftfeuchtigkeit oder die Sichtbedingungen für den Fahrer, die durch fahrzeugseitige Sensoren bestimmbar sind, und
- von Verkehrsnachrichten, die durch Empfangseinrichtungen des Fahrzeugs empfangen werden können,
verändert wird, wobei die Lichtmatrix 23 innerhalb der Bildmatrix 25 vorzugsweise vertikal verschoben wird. Diese Beispiele sind nicht gesondert dargestellt.

Die aktuelle Verkehrslage wie beispielsweise Stau mit Stop&Go-Verkehr, auf der Strecke befindliche Sondertransporter, Unfallbereiche, etc. können elektronisch über eine mobile Datenanbindung an das Fahrzeugs übermittelt werden und dazu herangezogen werden, eine verkehrsabhängige Einstellung der Fahrzeugscheinwerfer durchzuführen.

Zusätzlich können Lichtfunktionen abhängig von den Abständen zu anderen Fahrzeugen gesteuert werden. Beispielsweise können Positionsdaten anderer Fahrzeuge per Funkverbindung empfangen werden, sofern diese Fahrzeuge Nachrichten nach dem IEEE 802.11p Standard CEN ITS-G5 Standard (IEEE 1609) oder nach dem SAE Standard J2735 aussenden. In BSM ("Basic Satefy Message"), CAM ("Cooperative Awareness Message") oder DENM ("Decentralized Awareness Message") Nachrichten nach den genannten Standards sind jeweils Position und Abmessungen der sendenden Fahrzeuge enthalten und werden in der Regel alle 100 ms aktualisiert gesendet.

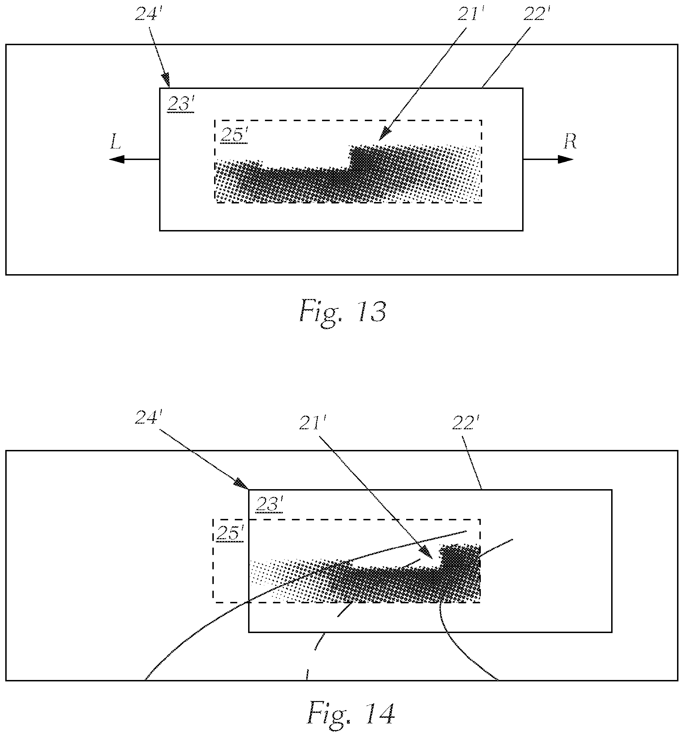

**Fig. 13** zeigt eine alternative Ausführungsform zu jener der Fig. 8, in der ein Lichtmodell in Form einer Lichtverteilung 21' (hier ist eine Abblendlicht-Lichtverteilung gezeigt) dar, die einen Leuchtbereich 22' aufweist. Das Lichtmodell 20' ist durch eine Lichtmatrix 23' beschreibbar. Die Umrandung der Bildmatrix 25' zeigt den Einstell- oder Verschiebebereich der Lichtmatrix 23' innerhalb der Bildmatrix 25' und somit den Einstellbereich des Fahrzeugscheinwerfers. Ein Positionsparameter 24' verweist auf die Lage der Lichtmatrix 23' innerhalb einer Bildmatrix 25', in der die Lichtmatrix 23 angeordnet ist.

Hier beschreibt die Bildmatrix 25' eine Fläche, die kleiner ist als die Fläche, die die Lichtmatrix 23' beschreibt. Dadurch kann erreicht werden, dass eine sehr großflächige Lichtverteilung durch die Lichtverteilung 21' definiert werden.

**Fig. 14** zeigt eine Kurvenlichtfunktion nach der Bildmatrix 25' aus Fig. 13, in der erkennbar ist, dass sich diese Lichtverteilung 21' trotzdem bis zum Rand der Bildmatrix 25' erstreckt, auch wenn die Lichtmatrix 23' am Rand der Bildmatrix 25' positioniert wird, wie beispielsweise bei einer Kurvenlichtfunktion.

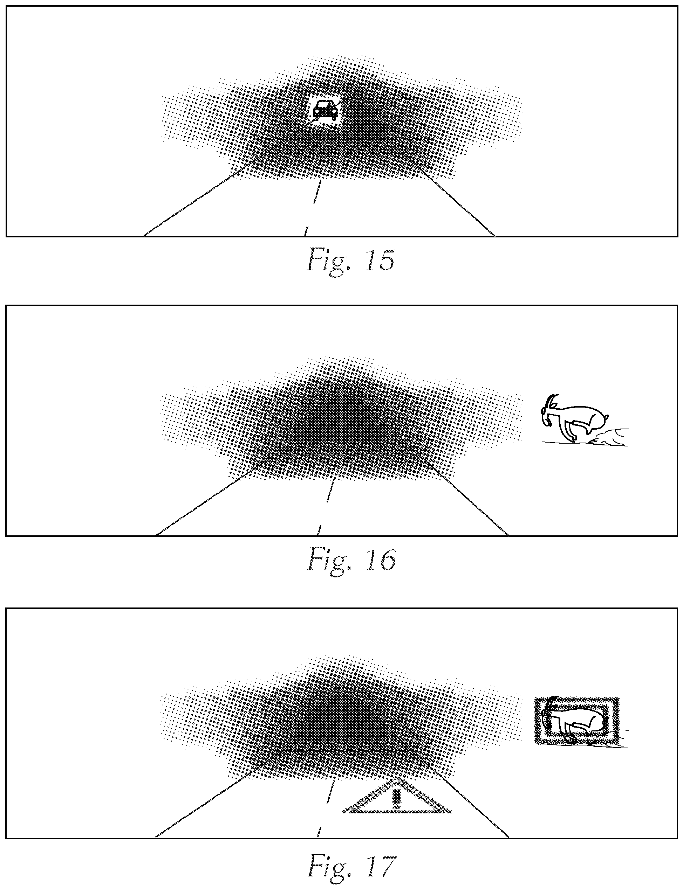

In **Fig. 15** ist dargestellt, wie der erzeugten Lichtverteilung 21' des Fahrzeugscheinwerfers ein Bereich eines entgegenkommenden Fahrzeugs überlagert werden kann, in dem die Lichtverteilung 21' abgedunkelt wird um das entgegenkommende Fahrzeug nicht zu blenden. Mit anderen Worten kann eine Lichtverteilung auch aus einem inversen Lichtmodell gebildet werden. Es können ferner mehrere Lichtmodelle für verschiedene Anwendungen gleichzeitig überlagert werden, wobei die Lichtmodelle dabei "konventionell", das heißt beispielsweise eine Abblendlicht-Lichtverteilung umfassen können und "inverse" Lichtmodelle, beispielsweise zum Ausblenden beziehungsweise "Nicht-Beleuchten" von bestimmten Bereichen, überlagert werden. Die Überlagerung kann unterschiedlich erfolgen, beispielsweise eine Addition der einzelnen Werte des Lichtmodells oder eine Festlegung auf den jeweilig hellsten oder dunkelsten Wert des entsprechenden Lichtmodells.

**Fig. 16** zeigt eine mögliche Gefahrensituation für ein Fahrzeug durch ein herannahendes beziehungsweise die Fahrbahn kreuzendes Tier.

Wie in **Fig. 17** gezeigt ist es ferner möglich, Informationen wie beispielsweise Verkehrszeichen, Warnhinweise (Warndreiecke, Ausrufzeichen, durch Rechtecke gekennzeichnete Gefahrenbereiche, etc.) oder auch Hinweise oder Markierungen für die Navigation dynamisch auf die Fahrbahn zu projizieren, das heißt als bewegte Symbole, wie beispielsweise projizierte Pfeile, deren Darstellung sich innerhalb der Projektion als "Animation" ausgeführt sind oder projizierte Linien, deren Verlauf, Breite oder Länge von Fahrzeugparametern wie Bremstätigkeit oder Lenkereinschlag abhängen und schnell auf Änderungen reagieren. Diese Technologie wird als "Advanced Information Beam^{™}" (AIB^{™}) bezeichnet. Derartige Animationen sind im Computerbereich gebräuchlich und können beispielsweise mit dem Datenformat "Graphics Interchange Format" (".gif") erfasst und gespeichert werden.

### Liste der Bezugszeichen:

- 1,11: Fahrzeugscheinwerfer
- 2, 12: Lichtquelle
- 3, 13: Primäroptik
- 4, 14: Projektionsoptik
- 5: Steuereinrichtung
- 6: Ausgabeeinheit
- 7, 17: optoelektronisches Bauteil
- 8: optoelektronisches Element
- 9, 19: Ansteuerungseinheit
- 20: Lichtmodell
- 21, 21': Lichtverteilung
- 22, 22': Leuchtbereich
- 23, 23': Lichtmatrix
- 24, 24': Positionsparameter
- 25, 25': Bildmatrix
- 26: Videosignal
- L, R: vertikale Verschiebung
- S1: Datensignal
- S2: V-Sync Signal
- T1: Zeitfenster 1
- T2: Zeitfenster 2
- P1, P1': Vordere Signal-Schulter ("front porch")
- P2: Hintere Signal-Schulter ("back porch")
- V1, V1': Video-Synchronisationsimpuls
- PIC, PIC': Bildinformation
- X, Y, Z: Koordinaten
- XA, YA, ZA: Achsen

## Patentansprüche

1. Fahrzeugscheinwerfer (1, 11), umfassend zumindest eine Lichtquelle (2, 12), zumindest eine Projektionsoptik (4, 14), zumindest eine Steuereinrichtung (5), zumindest eine Ausgabeeinheit (6), sowie zumindest ein optoelektronisches Bauteil (7, 17), das eine steuerbare Anordnung von mehreren, individuell verstellbaren optoelektronischen Elementen (8) in Form einer zweidimensionalen Matrix umfasst, wobei eine Bildauflösung durch das Produkt aus der Anzahl von Zeilen und Spalten der Matrix definiert ist, und der Fahrzeugscheinwerfer (1, 11) dazu eingerichtet ist, Licht von der zumindest einen Lichtquelle (2, 12) in Richtung des zumindest einen optoelektronischen Bauteils (7, 17) abzustrahlen und mittels des zumindest einen optoelektronischen Bauteils (7, 17) zu modulieren und zumindest teilweise in Richtung der zumindest einen Projektionsoptik (4, 14) zu leuchten und vor dem Fahrzeug ein Lichtbild auszubilden, wobei
die zumindest eine Steuereinrichtung (5) mit der zumindest einen Ausgabeeinheit (6) verbunden ist, die zumindest eine Ausgabeeinheit (6) mit dem zumindest einen optoelektronischen Bauteil (7, 17) zum Ansteuern der optoelektronischen Elemente (8) verbunden ist,
wobei seitens der zumindest einen Steuereinrichtung (5) zumindest ein Lichtmodell (20) gespeichert ist, **dadurch gekennzeichnet, dass**
die zumindest eine Steuereinrichtung (5) dazu eingerichtet ist, aus dem Lichtmodell (20) eine zweidimensionale Lichtmatrix (23, 23') zu bilden und die Lichtmatrix (23, 23') in Abhängigkeit von einem Positionsparameter (24, 24') zumindest teilweise innerhalb einer zweidimensionalen Bildmatrix (25, 25') anzuordnen und
mittels der zumindest einen Ausgabeeinheit (6) die Bildmatrix (25, 25') von der zumindest einen Steuereinrichtung (5) zu dem zumindest einen optoelektronischen Bauteil (7, 17) übertragen werden,
wobei
der Positionsparameter (24, 24') in Abhängigkeit von Verkehrsnachrichten, die durch Mobil- oder Rundfunk-Empfangseinrichtungen des Fahrzeugs empfangen werden können, und zusätzlich in Abhängigkeit von zumindest einer der folgenden Größen veränderbar ist:
• dem Beladungszustand des Fahrzeugs;
• dem Lenkwinkel des Fahrzeugs;
• dem Straßenverlauf;
• der Fahrgeschwindigkeit des Fahrzeugs;
• der Witterung in der Umgebung der Fahrbahn, wobei
die zumindest eine Steuereinrichtung (5) dazu eingerichtet ist, in Reaktion auf Änderung des Positionsparameters (24, 24') die Lichtmatrix (23, 23') innerhalb der Bildmatrix (25, 25') zu verschieben, wobei die Bildmatrix (25, 25') eine Fläche beschreibt, die größer ist, bevorzugt zumindest doppelt so groß, besonders bevorzugt zumindest dreimal so groß ist, als die Fläche, die die Lichtmatrix (23, 23') beschreibt, oder die Bildmatrix (25, 25') eine Fläche beschreibt, die kleiner ist, bevorzugt höchstens halb so groß, besonders bevorzugt höchstens ein Drittel so groß ist, als die Fläche, die die Lichtmatrix (23, 23') beschreibt.

2. Fahrzeugscheinwerfer (1, 11) nach Anspruch 1, **dadurch gekennzeichnet, dass** das zumindest eine Lichtmodell eine Lichtverteilung für einen Fahrzeugscheinwerfer definiert, bevorzugt eine Lichtverteilung eines Abblendlichts oder eines Fernlichts.

3. Fahrzeugscheinwerfer (1, 11) nach Anspruch 1 oder 2, **dadurch gekennzeichnet, dass** das zumindest eine Lichtmodell (20) durch eine Matrix von Helligkeitswerten einer Lichtverteilung definiert ist, die vorzugsweise der Lichtmatrix (23, 23') entspricht.

4. Fahrzeugscheinwerfer (1, 11) nach einem der Ansprüche 1 bis 3, **dadurch gekennzeichnet, dass** das zumindest eine Lichtmodell durch eine zweidimensionale Funktion definiert ist, wobei die Funktionswerte Helligkeitswerte einer Lichtverteilung festlegen, wobei vorzugsweise die zweidimensionale Funktion durch Interpolation zwischen den Stützstellen in die Lichtmatrix (23, 23') aufgespannt wird.

5. Fahrzeugscheinwerfer (1, 11) nach einem der Ansprüche 1 bis 4, **dadurch gekennzeichnet, dass** die zumindest eine Lichtquelle (2) eine Halbleiter-Leuchtdiode, insbesondere eine Hochstrom-Leuchtdiode oder eine Laser-Diode umfasst.

6. Verfahren zur Erzeugung zumindest einer Lichtverteilung mit einem Fahrzeugscheinwerfer (1, 11), umfassend zumindest eine Lichtquelle (2, 12), zumindest eine Projektionsoptik (4, 14), zumindest eine Steuereinrichtung (5), zumindest eine Ausgabeeinheit (6), sowie zumindest ein optoelektronisches Bauteil (7, 17), das eine steuerbare Anordnung von mehreren, individuell verstellbaren optoelektronischen Elementen (8) in Form einer zweidimensionalen Matrix umfasst, wobei eine Bildauflösung durch das Produkt aus der Anzahl von Zeilen und Spalten der Matrix definiert ist, und der Fahrzeugscheinwerfer (1, 11) dazu eingerichtet ist, Licht von der zumindest einen Lichtquelle (2, 12) in Richtung des zumindest einen optoelektronischen Bauteils (7, 17) abzustrahlen und mittels des zumindest einen optoelektronischen Bauteils (7, 17) zu modulieren und zumindest teilweise in Richtung der zumindest einen Projektionsoptik (4, 14) zu leuchten und vor dem Fahrzeug ein Lichtbild auszubilden, wobei
die zumindest eine Steuereinrichtung (5) mit der zumindest einen Ausgabeeinheit (6) verbunden ist, die zumindest eine Ausgabeeinheit (6) mit dem zumindest einen optoelektronischen Bauteil (7, 17) verbunden ist und die optoelektronische Elemente (8) ansteuert,
wobei seitens der zumindest einen Steuereinrichtung (5) zumindest ein Lichtmodell (20) gespeichert ist, **dadurch gekennzeichnet, dass**
die zumindest eine Steuereinrichtung (5) aus dem Lichtmodell (20) eine zweidimensionale Lichtmatrix (23, 23') bildet und die Lichtmatrix (23, 23') in Abhängigkeit von einem Positionsparameter (24, 24') zumindest teilweise innerhalb einer zweidimensionalen Bildmatrix (25, 25') anordnet und mittels der zumindest einen Ausgabeeinheit (6) die Bildmatrix (25, 25') von der zumindest einen Steuereinrichtung (5) zu dem zumindest einen optoelektronischen Bauteil (7, 17) überträgt,
wobei
der Positionsparameter in Abhängigkeit von Verkehrsnachrichten verändert wird, die durch Mobil- oder Rundfunk-Empfangseinrichtungen des Fahrzeugs empfangen werden können, und zusätzlich in Abhängigkeit von zumindest einer der folgenden Größen verändert wird:
• der Beladungszustand des Fahrzeugs;
• dem Lenkwinkel des Fahrzeugs;
• der Straßenverlauf, der vorzugsweise aus Navigationsdaten des Fahrzeugs bestimmbar ist;
• der Fahrgeschwindigkeit des Fahrzeugs;
• der Witterung in der Umgebung der Fahrbahn, insbesondere durch die Temperatur, die Luftfeuchtigkeit oder die Sichtbedingungen für den Fahrer, die durch fahrzeugseitige Sensoren bestimmbar sind,
wobei die Lichtmatrix (23, 23') innerhalb der Bildmatrix (25, 25') verschoben wird, wobei die Bildmatrix (25, 25') eine Fläche beschreibt, die größer ist, bevorzugt zumindest doppelt so groß, besonders bevorzugt zumindest dreimal so groß ist, als die Fläche, die die Lichtmatrix (23, 23') beschreibt, oder die Bildmatrix (25, 25') eine Fläche beschreibt, die kleiner ist, bevorzugt höchstens halb so groß, besonders bevorzugt höchstens ein Drittel so groß ist, als die Fläche, die die Lichtmatrix (23, 23') beschreibt.

7. Verfahren nach Anspruch 6,
**dadurch gekennzeichnet, dass** das zumindest eine Lichtmodell eine Lichtverteilung für einen Fahrzeugscheinwerfer definiert, bevorzugt eine Lichtverteilung eines Abblendlichts oder eines Fernlichts.

8. Verfahren nach Anspruch 6 oder 7, **dadurch gekennzeichnet, dass** wenn der Positionsparameter (24, 24') zusätzlich in Abhängigkeit des Lenkwinkels des Fahrzeugs verändert wird, die Lichtmatrix (23, 23') innerhalb der Bildmatrix (25, 25') horizontal verschoben wird und vorzugsweise eine Kurvenlicht-Lichtfunktion eines Fahrzeugscheinwerfers gebildet werden kann.

9. Verfahren nach einem der Ansprüche 6 bis 8, **dadurch gekennzeichnet, dass** zumindest ein Lichtmodell (20) durch eine Matrix von Helligkeitswerten einer Lichtverteilung definiert ist, die vorzugsweise der Lichtmatrix (23, 23') entspricht.

10. Verfahren nach einem der Ansprüche 6 bis 9, **dadurch gekennzeichnet, dass** zumindest ein Lichtmodell durch eine zweidimensionale Funktion, die durch eine Vielzahl von Stützstellen, die Helligkeitswerte einer Lichtverteilung definieren, beschreibbar ist und die zweidimensionale Funktion vorzugsweise durch Interpolation zwischen den Stützstellen in die Lichtmatrix (23, 23') gebildet wird.

## Claims

1. Vehicle headlamp (1, 11), comprising at least one light source (2, 12), at least one projection optic (4, 14), at least one control device (5), at least one output unit (6), and at least one optoelectronic component (7, 17) which comprises a controllable arrangement of a plurality of individually adjustable optoelectronic elements (8) in the form of a two-dimensional matrix, an image resolution being defined by the product of the number of rows and columns of the matrix, and
the vehicle headlamp (1, 11) is arranged to emit light from the at least one light source (2, 12) in the direction of the at least one optoelectronic component (7, 17) and to modulate by means of the at least one optoelectronic component (7, 17) and to illuminate at least partially in the direction of the at least one projection optic (4, 14) and to form a light image in front of the vehicle, wherein
the at least one control device (5) being connected to the at least one output unit (6), the at least one output unit (6) being connected to the at least one optoelectronic component (7, 17) for driving the optoelectronic elements (8)
wherein at least one light model (20) is stored on the part of the at least one control device (5), **characterized in that**
the at least one control device (5) is set up to form a two-dimensional light matrix (23, 23') from the light model (20) and to arrange the light matrix (23, 23') at least partially within a two-dimensional image matrix (25, 25') as a function of a position parameter (24, 24'), and
by means of the at least one output unit (6), the image matrix (25, 25') is transmitted from the at least one control device (5) to the at least one optoelectronic component (7, 17),
wherein
the position parameter (24, 24') can be changed as a function of traffic messages which can be received by mobile or broadcast reception devices of the vehicle, and additionally as a function of at least one of the following variables
- the loading condition of the vehicle;
- the steering angle of the vehicle
- the course of the road;
- the driving speed of the vehicle
- the weather conditions in the vicinity of the roadway, wherein
the at least one control device (5) is set up to shift the light matrix (23, 23') within the image matrix (25, 25') in response to a change in the position parameter (24, 24'), the image matrix (25, 25') describing an area which is larger, preferably at least twice as large, as the area of the image matrix (25, 25'), particularly preferably at least three times as large as the area described by the light matrix (23, 23'), or the image matrix (25, 25') describes an area which is smaller, preferably at most half as large, particularly preferably at most one third as large, than the area described by the light matrix (23, 23').

2. Vehicle headlamp (1, 11) according to claim 1, **characterized in that** the at least one light model defines a light distribution for a vehicle headlamp, preferably a light distribution of a low beam or a high beam.

3. Vehicle headlamp (1, 11) according to claim 1 or 2, **characterized in that** the at least one light model (20) is defined by a matrix of brightness values of a light distribution which preferably corresponds to the light matrix (23, 23').

4. Vehicle headlamp (1, 11) according to one of claims 1 to 3, **characterized in that** the at least one light model is defined by a two-dimensional function, the function values defining brightness values of a light distribution, the two-dimensional function preferably being spanned into the light matrix (23, 23') by interpolation between the supporting points.

5. Vehicle headlamp (1, 11) according to any one of claims 1 to 4, **characterized in that** the at least one light source (2) comprises a semiconductor light-emitting diode, in particular a high-current light-emitting diode or a laser diode.

6. Method for generating at least one light distribution with a vehicle headlamp (1, 11), comprising at least one light source (2, 12), at least one projection optical system (4, 14), at least one control device (5), at least one output unit (6), and at least one optoelectronic component (7, 17) which comprises a controllable arrangement of a plurality of individually adjustable optoelectronic elements (8) in the form of a two-dimensional matrix, an image resolution being defined by the product of the number of rows and columns of the matrix, and
the vehicle headlamp (1, 11) is arranged to emit light from the at least one light source (2, 12) in the direction of the at least one optoelectronic component (7, 17) and to modulate by means of the at least one optoelectronic component (7, 17) and to illuminate at least partially in the direction of the at least one projection optic (4, 14) and to form a light image in front of the vehicle, wherein
the at least one control device (5) being connected to the at least one output unit (6), the at least one output unit (6) being connected to the at least one optoelectronic component (7, 17) and driving the optoelectronic elements (8)
wherein on the part of the at least one control device (5) at least one light model (20) is stored, **characterized in that**
the at least one control device (5) forms a two-dimensional light matrix (23, 23') from the light model (20) and arranges the light matrix (23, 23') at least partially within a two-dimensional image matrix (25, 25') as a function of a position parameter (24, 24') and transmits the image matrix (25, 25') from the at least one control device (5) to the at least one optoelectronic component (7, 17) by means of the at least one output unit (6),
wherein
the position parameter is changed as a function of traffic messages that may be received by mobile or broadcast receiving equipment of the vehicle, and is additionally changed as a function of at least one of the following:
- the loading condition of the vehicle; and
- the steering angle of the vehicle
- the course of the road, which can preferably be determined from navigation data of the vehicle; and
- the driving speed of the vehicle
- the weather conditions in the vicinity of the roadway, in particular by the temperature, the humidity or the visibility conditions for the driver, which can be determined by sensors on the vehicle,
the light matrix (23, 23') being displaced within the image matrix (25, 25'), the image matrix (25, 25') describing an area which is larger, preferably at least twice as large, particularly preferably at least three times as large, as the area which the light matrix (23, 23') describes, or the image matrix (25, 25') describes an area which is smaller, preferably at most half as large, particularly preferably at most one third as large, than the area which the light matrix (23, 23') describes.

7. Method according to claim 6, **characterized in that** the at least one light model defines a light distribution for a vehicle headlight, preferably a light distribution of a low beam or a high beam.

8. Method according to claim 6 or 7, **characterized in that** if the position parameter (24, 24') is additionally changed in dependence on the steering angle of the vehicle, the light matrix (23, 23') is shifted horizontally within the image matrix (25, 25') and preferably a cornering light function of a vehicle headlight can be formed.

9. Method according to any one of claims 6 to 8, **characterized in that** at least one light model (20) is defined by a matrix of brightness values of a light distribution which preferably corresponds to the light matrix (23, 23').

10. Method according to any one of claims 6 to 9, **characterized in that** at least one light model is describable by a two-dimensional function defined by a plurality of grid points defining brightness values of a light distribution, and
the two-dimensional function is preferably formed by interpolation between the supporting points into the light matrix (23, 23').

## Revendications

1. Projecteur de véhicule (1, 11), comprenant au moins une source lumineuse (2, 12), au moins une optique de projection (4, 14), au moins un dispositif de commande (5), au moins une unité de sortie (6), ainsi qu'au moins un composant optoélectronique (7, 17) qui comprend un agencement commandable de plusieurs éléments optoélectroniques (8) réglables individuellement sous la forme d'une matrice bidimensionnelle, une résolution d'image étant définie par le produit du nombre de lignes et de colonnes de la matrice, et
le phare de véhicule (1, 11) est conçu pour émettre de la lumière à partir de la au moins une source de lumière (2, 12) en direction du au moins un composant optoélectronique (7, 17) et pour moduler au moyen du au moins un composant optoélectronique (7, 17) et pour éclairer au moins partiellement en direction de la au moins une optique de projection (4, 14) et pour former une image lumineuse devant le véhicule, dans lequel
l'au moins un dispositif de commande (5) est relié à l'au moins une unité de sortie (6), l'au moins une unité de sortie (6) est reliée à l'au moins un composant optoélectronique (7, 17) pour commander les éléments optoélectroniques (8),
au moins un modèle de lumière (20) étant mémorisé du côté de l'au moins un dispositif de commande (5), **caractérisé en ce que**
l'au moins un dispositif de commande (5) est conçu pour former une matrice lumineuse bidimensionnelle (23, 23') à partir du modèle lumineux (20) et pour disposer la matrice lumineuse (23, 23') en fonction d'un paramètre de position (24, 24') au moins partiellement à l'intérieur d'une matrice d'image bidimensionnelle (25, 25'), et
au moyen de l'au moins une unité de sortie (6), la matrice d'image (25, 25') est transmise par l'au moins un dispositif de commande (5) à l'au moins un composant optoélectronique (7, 17),
où
le paramètre de position (24, 24') peut être modifié en fonction de messages de trafic qui peuvent être reçus par des dispositifs de réception mobiles ou radio du véhicule et, en outre, en fonction d'au moins une des grandeurs suivantes :
- de l'état de chargement du véhicule ;
- de l'angle de braquage du véhicule ;
- du tracé de la route ;
- de la vitesse de déplacement du véhicule ;
- des conditions météorologiques dans l'environnement de la chaussée, dans lequel
le au moins un dispositif de commande (5) est agencé pour déplacer la matrice lumineuse (23, 23') à l'intérieur de la matrice d'image (25, 25') en réponse à la modification du paramètre de position (24, 24'), la matrice d'image (25, 25') décrivant une surface qui est plus grande, de préférence au moins deux fois plus grande, de préférence au moins trois fois plus grande que la surface décrite par la matrice lumineuse (23, 23'), ou la matrice d'image (25, 25') décrit une surface qui est plus petite, de préférence au maximum deux fois plus grande, de préférence au maximum un tiers plus grande que la surface décrite par la matrice lumineuse (23, 23').

2. Projecteur de véhicule (1, 11) selon la revendication 1, **caractérisé en ce que** ledit au moins un modèle de lumière définit une distribution de lumière pour un projecteur de véhicule, de préférence une distribution de lumière d'un feu de croisement ou d'un feu de route.

3. Projecteur de véhicule (1, 11) selon la revendication 1 ou 2, **caractérisé en ce que** ledit au moins un modèle de lumière (20) est défini par une matrice de valeurs de luminosité d'une distribution lumineuse correspondant de préférence à la matrice de lumière (23, 23').

4. Projecteur de véhicule (1, 11) selon l'une des revendications 1 à 3, **caractérisé en ce que** l'au moins un modèle de lumière est défini par une fonction bidimensionnelle, les valeurs de la fonction définissant des valeurs de luminosité d'une distribution de lumière, la fonction bidimensionnelle étant de préférence étendue par interpolation entre les points d'appui dans la matrice de lumière (23, 23').

5. Projecteur de véhicule (1, 11) selon l'une quelconque des revendications 1 à 4, **caractérisé en ce que** ladite au moins une source de lumière (2) comprend une diode électroluminescente à semiconducteur, notamment une diode électroluminescente à courant élevé ou une diode laser.

6. Procédé pour produire au moins une distribution de lumière avec un phare de véhicule (1, 11), comprenant au moins une source de lumière (2, 12), au moins une optique de projection (4, 14), au moins un dispositif de commande (5), au moins une unité de sortie (6), ainsi qu'au moins un composant optoélectronique (7, 17) qui comprend un agencement commandable de plusieurs éléments optoélectroniques (8) réglables individuellement sous la forme d'une matrice bidimensionnelle, une résolution d'image étant définie par le produit du nombre de lignes et de colonnes de la matrice, et
le projecteur de véhicule (1, 11) est conçu pour émettre de la lumière à partir de la au moins une source de lumière (2, 12) en direction du au moins un composant optoélectronique (7, 17) et pour moduler au moyen du au moins un composant optoélectronique (7, 17) et pour éclairer au moins partiellement en direction de la au moins une optique de projection (4, 14) et pour former une image lumineuse devant le véhicule, dans lequel
l'au moins un dispositif de commande (5) est relié à l'au moins une unité de sortie (6), l'au moins une unité de sortie (6) est reliée à l'au moins un composant optoélectronique (7, 17) et commande les éléments optoélectroniques (8),
au moins un modèle de lumière (20) étant mémorisé du côté de l'au moins un dispositif de commande (5), **caractérisé en ce que**
l'au moins un dispositif de commande (5) forme à partir du modèle de lumière (20) une matrice de lumière bidimensionnelle (23, 23') et dispose la matrice de lumière (23, 23') en fonction d'un paramètre de position (24, 24') au moins partiellement à l'intérieur d'une matrice d'image bidimensionnelle (25, 25') et transmet au moyen de l'au moins une unité de sortie (6) la matrice d'image (25, 25') de l'au moins un dispositif de commande (5) à l'au moins un composant optoélectronique (7, 17),
où
le paramètre de position est modifié en fonction de messages de trafic qui peuvent être reçus par des dispositifs de réception mobiles ou radio du véhicule, et est en outre modifié en fonction d'au moins l'une des quantités suivantes :
- de l'état de chargement du véhicule ;
- l'angle de braquage du véhicule ;
- du tracé de la route, qui peut de préférence être déterminé à partir des données de navigation du véhicule ;
- la vitesse de déplacement du véhicule ;
- des conditions météorologiques dans l'environnement de la chaussée, notamment par la température, l'humidité de l'air ou les conditions de visibilité pour le conducteur, qui peuvent être déterminées par des capteurs embarqués dans le véhicule,
la matrice lumineuse (23, 23') étant déplacée à l'intérieur de la matrice d'image (25, 25'), la matrice d'image (25, 25') décrivant une surface qui est plus grande, de préférence au moins deux fois plus grande, de manière particulièrement préférée au moins trois fois plus grande, que la surface, que décrit la matrice de lumière (23, 23'), ou la matrice d'image (25, 25') décrit une surface qui est plus petite, de préférence au maximum deux fois plus grande, de manière particulièrement préférée au maximum un tiers plus grande, que la surface que décrit la matrice de lumière (23, 23').

7. Procédé selon la revendication 6, **caractérisé en ce que** ledit au moins un modèle de lumière définit une distribution de lumière pour un phare de véhicule, de préférence une distribution de lumière d'un feu de croisement ou d'un feu de route.

8. Procédé selon la revendication 6 ou 7, **caractérisé en ce que** lorsque le paramètre de position (24, 24') est en outre modifié en fonction de l'angle de braquage du véhicule, la matrice d'éclairage (23, 23') est déplacée horizontalement à l'intérieur de la matrice d'image (25, 25') et, de préférence, une fonction d'éclairage de virage d'un phare de véhicule peut être formée.

9. Procédé selon l'une des revendications 6 à 8, **caractérisé en ce qu'**au moins un modèle de lumière (20) est défini par une matrice de valeurs de luminosité d'une distribution de lumière correspondant de préférence à la matrice de lumière (23, 23').

10. Procédé selon l'une des revendications 6 à 9, **caractérisé en ce qu'**au moins un modèle de lumière peut être décrit par une fonction bidimensionnelle qui est définie par une pluralité de points d'appui qui définissent des valeurs de luminosité d'une distribution de lumière, et la fonction bidimensionnelle est de préférence formée par interpolation entre les points d'appui dans la matrice de lumière (23, 23').
